(19) Europäisches Patentamt
European Patent Office
Office européen des brevets

(11) **EP 3 091 855 B1**

(12) **EUROPEAN PATENT SPECIFICATION**

(45) Date of publication and mention
of the grant of the patent:
**19.04.2017 Bulletin 2017/16**

(21) Application number: **14809886.6**

(22) Date of filing: **11.12.2014**

(51) Int Cl.:
*A23L 23/10* (2016.01)    *A23L 23/00* (2016.01)

(86) International application number:
**PCT/EP2014/077441**

(87) International publication number:
**WO 2015/091220 (25.06.2015 Gazette 2015/25)**

(54) **FOOD CONCENTRATE**

**LEBENSMITTELKONZENTRAT**

**CONCENTRÉ ALIMENTAIRE**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **18.12.2013 EP 13198001**

(43) Date of publication of application:
**16.11.2016 Bulletin 2016/46**

(73) Proprietors:
• **Unilever N.V.**
**3013 AL Rotterdam (NL)**
Designated Contracting States:
**AL AT BE BG CH CZ DE DK EE ES FI FR GR HR
HU IS IT LI LT LU LV MC MK NL NO PL PT RO RS
SE SI SK SM TR**
• **Unilever PLC**
**London, Greater London EC4Y 0DY (GB)**
Designated Contracting States:
**CY GB IE MT**

(72) Inventors:
• **INOUE, Chiharu**
**NL-3133 AT Vlaardingen (NL)**
• **GROSDEMANGE, Sébastien**
**74074 Heilbronn (DE)**
• **LEMMERS, Marc**
**NL-3133 AT Vlaardingen (NL)**
• **PERRINE, Marion, Esclarmonde**
**74074 Heilbronn (DE)**
• **SAILER, Winfried**
**74074 Heilbronn (DE)**

(74) Representative: **Tjon, Hon Kong Guno**
**Unilever N.V.**
**Unilever Patent Group**
**Olivier van Noortlaan 120**
**3133 AT Vlaardingen (NL)**

(56) References cited:
**WO-A1-2007/068483    US-A1- 2008 299 267**

**Description**

**Field of the invention**

The present invention is in the field of concentrated food compositions. It further relates to a process to prepare the same. It further relates to the use of said food composition for preparing a bouillon, a soup, a sauce, gravy or a seasoned dish.

**Background of the invention**

High-salt concentrate food compositions which after dilution in water or a dish result in a bouillon, a soup, a sauce, a gravy or a seasoned dish have been described. This class of products is known to the consumer as well as to the skilled person for many decades. They are known for example in the form of dry bouillon cubes or soup cubes or seasoning cubes. Concentrated products can be dry (e.g. dehydrated), liquid, semiliquid or paste-like products which, after the addition to water according to the directions for use, yield ready to eat preparations.

Recently, savoury concentrate food compositions became available which are in the form of a semi-solid gel. Compared to traditional dry concentrates like bouillon cubes, these gelled concentrates can contain more water and are considered to have a more fresh appearance. Consumers like that a product "sets back" once pressed, showing elasticity, like a gel. This is often associated with fresh food of high quality (e.g. fresh fish, liver, meat), whereas a hard texture may be associated with non-fresh products that might have dried out.

Gelled savoury concentrates usually contain relatively high amounts of water and salt. The salt is added for taste reasons, but contributes as well to the microbiological stability of the gelled savoury concentrate. Compared to liquid concentrates, the gelled concentrates show the advantage that they are semi-solid, and sufficiently firm (also referred to in the art as self-sustaining, shape stable, soft-solid or semi-solid), and non-sticky and therefore can be unit dosed, like a traditional bouillon cube.

Gelled savoury concentrates rely on the presence of a gelling agent for their firm, semi-solid, gelled texture. A gelling agent can comprise one or more gelling and/or thickening agents which on their own or together provide the firm semi-solid gel texture. For the application in high-salt food concentrates, the gelling agent should be compatible with high-salt levels. Most gelling agents that can form semi-solid gelled, ready to eat (low-salt levels) food products, appeared not compatible with the relatively high-salt levels, such as common in savoury food concentrates. At these high-salt levels many gelling agents appeared to behave very different than they do at low-salt levels. In a high-salt environment they might lose their texturing ability, or often do not form a gel at all, or show other significant disadvantages which make production of savoury high-salt gels at industrial scale far from attractive, if not impossible.

Additionally, traditional gelled food concentrates are often of limited use in meal applications and soups that require a degree of creaminess. The incorporation of ingredients which result in a certain creaminess and in concentrations required for this type of application has usually a negative impact on the structure of savoury gelled concentrates that are based on traditional gel systems.

To achieve a gel structure using gelling agents that show sensitivity to high-salt conditions or that do not allow the addition of creamy ingredients in sufficient concentration, the easiest solution would be to increase the gelling agent concentration. However, as a consequence of an increased gelling agent concentration other issues may appear. For some gelling agents, increasing their concentration to allow incorporation of creamy ingredients would cause processing problems due to a too high viscosity during processing. Also when the price of the gelling raw material is high, an increase of gelling agent concentration to sufficient level to counteract high-salt sensitivity or to incorporate creamy ingredients may lead to unaffordable recipe costs.

In WO2007/068483 and WO2007/068402, bouillon and seasoning products comprising gelatine and starch are disclosed. However, the combination of starch and gelatine usually leads to gels that are relatively sticky. There is a need in the art to provide a gelled food concentrate in a monodose format that is easy to remove from its packaging. Moreover the food concentrate as described in WO2007/068483 doesn't provide enough creaminess in end application as required for a typical creamy soup.

WO2007/068484 discloses a gelled savoury concentrate comprising a gelling agent which contains a mixture of xanthan gum and locust bean gum. EP2468110 discloses a food composition comprising low-methoxy pectin. WO2012/062919 discloses a composition in the form of a gel comprising iota-carrageenan and xanthan gum. Despite the development of gelled concentrate food compositions which could be produced with the required high-salt level, it was experienced that these savoury concentrate food compositions show several disadvantages.

Present day consumers prefer natural ingredients in food products, especially ingredients that they are familiar with. One of the most common gelling agents available is gelatine. Nevertheless, gelatine used as single gelling agent, does not provide the required gelling in the presence of the high salt content needed for a savoury concentrate. Moreover, this gelling agent used in a formulation without additional thickener may create processing issues, due to a too low viscosity during processing. A too low viscosity can promote phase- or particles separation during processing and/or filling of the product.

WO2012/097930 discloses a packaged food concentrate in the form of a gel comprising, from 2 wt% to 15 wt% of NaCl, water, an effective amount of gelling agent, from 5 wt% to 60 wt% of a liquid polyol and non-gelatinised starch. The examples present a composition comprising gelatine, fat, and salt. However, there is still a need for a gelatine structured composition with a higher salt tolerance. Furthermore, gelatine gels as such have a relatively low melting temperature of approximately 30-35 °C, which causes difficulties during storage and transport of the product.

It is therefore an object of the present invention to provide high salt structured food concentrates, based on gelatine, preferably in the form of a gelled food concentrate.

It is another object of the present invention to provide a shape-stable, non-sticky, structured (preferably gelled) food concentrate.

It is another object of the present invention to provide a food concentrate that adds creaminess to a bouillon, a soup, a sauce, gravy or a seasoned dish.

It is another object of the present invention to provide easy processing of a structured (preferably gelled) food concentrate without risk of phase or particles separation, by providing a higher viscosity during processing.

It is another object of the present innovation to provide a natural structured (preferably gel) system.

It is another object of the present invention to provide a structured (preferably gelled) food concentrate for use as instant soup.

It is another object of the present invention to provide a structured (preferably gelled) food concentrate that can be quickly dissolved in hot water.

Surprisingly it is found that a food concentrate comprising gelatine, an oil or fat, water, and salt, having a water:oil ratio between 1:0.75 and 1:4, provides a gelatine structured (preferably gelled) food concentrate that meets one or more of the above mentioned objects; in particular it is found that the gelatine-oil structured food concentrates are stable for a long time, even at relatively high storage temperatures of up to 55 °C

## Summary of the invention

Accordingly in a first aspect the invention provides a structured food concentrate comprising 1 to 30% by weight of gelatine based on water, 20 to 75% by weight of an oil or fat, 15 to 40% by weight of salt based on water and water; characterised in that the water:oil mass ratio is between 1:0.75 and 1:4. The food concentrate is preferably a packaged structured food concentrate.

In a second aspect the invention provides a process for preparing a packaged structured food concentrate, comprising 1 to 30% by weight of gelatine, 20 to 75% by weight of an oil or fat, 15 to 40% by weight of salt based on water and water, characterised in that the water:oil mass ratio is between 1:0.75 and 1:4;

the process comprising the steps of: melting solid fats (if solid fats are used), preparing a mixture comprising water, premix of dry ingredients, adding oils or melted fats into the mixture, in a way that allows proper mixing and emulsification, stirring the mixture till fully homogenized, adding NaCl to the mixture at steps b) or d), adding gelatin to the mixture at steps b) or d), filling a package with the mixture resulting from step g), allow setting of the mixture resulting from step f), to form a structured packaged food concentrate, preferably in the form of a gel.

By creaminess is meant the property of the present invention to resemble cream in colour, meaning having a light turbid even whitish colour, and imparting, at least in part, the said property to the final application, which is a bouillon, a soup, a sauce, gravy or a seasoned dish. Moreover, creaminess is associated with fat content and fat emulsification, which is also delivered into the final application through product of the current invention.

The product is preferably a structured food concentrate. By structured food concentrate is meant a product having as such enough viscosity to substantially maintain its shape, also when removed from its packaging. Preferably a structured food concentrate can be taken out of its packaging in one single piece. A structured food concentrate is preferably a gel or another structured food concentrate like a dough or a paste, that exhibits shape stability, whereby dough can be seen as a form of paste.

By shape stability is meant that the food concentrate retains its shape during longer time after removal from packaging.

These and other aspects, features and advantages will become apparent to those of ordinary skill in the art from a reading of the following detailed description and the appended claims. For the avoidance of doubt, any feature of one aspect of the present invention may be utilised in any other aspect of the invention. The word "comprising" is intended to mean "including" but not necessarily "consisting of" or "composed of." In other words, the listed steps or options need not be exhaustive. It is noted that the examples given in the description below are intended to clarify the invention and are not intended to limit the invention to those examples per se. Similarly, all percentages are weight/weight percentages unless otherwise indicated. Except in the operating and comparative examples, or where otherwise explicitly indicated, all numbers in this description indicating amounts of material or conditions of reaction, physical properties of materials and/or use are to be understood as modified by the word "about". Numerical ranges expressed in the format "from x to y" are understood to include x and y. When for a specific feature multiple preferred ranges are described in the format "from x to y", it is understood that all ranges combining the different endpoints are also contemplated.

**Detailed description of the invention**

Accordingly, the invention provides a food concentrate comprising gelatine, salt, oil and water. The concentrate according to the invention is preferably a bouillon concentrate, a (instant) soup concentrate, a sauce concentrate, gravy concentrate or a dish specific seasoning concentrate.

Without wishing to be bound by theory, it is thought that, when gelatine is used as single gelling agent, improved structuring or gelling is achieved, despite high salt levels, by using an oil-water emulsion that is structured by gelatine. Surprisingly this combination allows as well to achieve a higher viscosity during processing avoiding particle or phase separation issues. It is further thought that the same emulsion provides the apparent creaminess that is so much appreciated by present day consumers.

The structure of the food concentrate is preferably a gel, paste or dough, most preferably a gel.

The person of average skill in the art of food products recognizes a gel when he or she sees one. The appearance of a gel generally can be achieved in an aqueous environment when sufficient gelling agents are used in the formulation. A gel will usually have a smooth surface appearance, be shape-retaining at ambient temperature when exposed to gravity, but easily deformable (to some degree in an elastic way). The texture or rheology desired for the product according to the invention is preferably that of a gel. Regarding a gel, in scientific literature, e.g. "Das Rheologie Handbuch, Thomas Mezger, Curt R. Vincentz-Verlag, Hannover, 2000" a gel is typically defined by its ratio of elastic modulus G' to viscous modulus G".

The absolute value of the viscous modus G" is preferably greater than 1, preferably greater than 10 Pa more preferred greater than 50 Pa. This criterion distinguishes between thin solutions with gel character and more shape retaining structured food concentrates that are the intended products according to this invention.

More preferably the ratio of G'/G" is used to distinguish between a highly viscous fluid, e.g. a non-shape stable paste and an (elastic) system which is shape stable e.g. a jelly. This ratio should preferably be greater than 1 for a structured food concentrate according to the invention like a gel. For the given product, a ratio of greater than 1 is suitable. It is preferred, however, that said ratio is greater than 3, more preferably it is greater than 5. For the purpose of the present invention ambient temperature is defined as 20°C.

It is also preferred that such structured food concentrate has a relatively low tendency to syneresis (water separation) and is preferably an elastic, not too rigid gel (as such will facilitate removal from its packaging; elastic and not too rigid can best be judged by hand-feel).

In the present invention, preferably, the structured (or gelled/semi-solid) food concentrate has a G' of between 30 and 50000 Pa. Preferably, G' is lower than 50000 Pa, more preferably lower than 20000 Pa, even more preferably lower than 10000 Pa, even more preferably lower than 8000 Pa, even more preferably lower than 6000 Pa, even more preferably lower than 4000 Pa, even more preferably lower than 3500 Pa, most preferably lower than 3000 Pa. G' is preferably higher than 80, more preferably higher that 150 Pa, even more preferably higher than 200 Pa.

The absolute value of the viscous modulus G" of the structured food concentrate of the invention is preferably higher than 1, more preferably higher than 10, even more preferably, higher than 80 Pa. Preferably, the ratio of the elastic modulus G' to the viscous modulus G" is higher than 1 and lower than 1000. The ratio of G' to G" is preferably higher than 2, more preferably it is higher than 3. Preferably, this ratio is lower than 1000, more preferred lower than 200, even more preferably, lower than 100, most preferably lower than 50.

Said values for the elastic modulus (G') and viscous modulus (G") can be obtained by performing a measurement in a standard rheometer, such as an Anton Paar Physica rheometer or a TA Instruments rheometer, mounted with a parallel plate geometry and applying the following experimental protocol:

1) Pre-heat the plate to 75°C
2) Melt the sample at 65°C and load the liquid sample onto the plate,
3) Cool the sample to 5 °C, at a rate of 5 °C/min
4) Hold the sample at 5 °C for 15 minutes
5) Heat the sample to 20 °C and keep the sample at this temperature for 10 minutes
6) Record the values for the elastic modulus (G') and viscous modulus (G") 10 minutes after the sample has reached 20 °C, by oscillating the plate at a strain of 1% and a frequency of 1 Hz

Also it is desired that preferably the structured food concentrate is not too sticky (as such structured food concentrate is likely to be handled by fingers and to allow easy removal from the packaging).

A gel shows elastic deformation. This type of deformation is to a large extent reversible. For example, after reducing deforming pressure, e.g. from gravity or gentle pressure by a finger, the shape will reform to a large extent to its original form. In addition, at 20° C, a gel in the context of the present invention does not flow, like a liquid. Further, at 20° C, after cutting of the gel in some pieces, the pieces of gel cannot be substantially adhered and united by simple re-assembling of the gel pieces, to form the original volume of the gel.

In contrast to a gel, a paste does not show elastic deformation but shows a plastic deformation behavior, at least, the plastic deformation is (much) higher than the elastic deformation. Thus, after deformation by pressure, a paste will hardly return towards its original shape, if at all. Also liquid products neither show elastic deformation, nor are they shape stable after removal from the package. It is therefore in the normal skill of the artisan, to assess whether a product is a gel or not.

A gel can be distinguished from a paste in the following manner using a texture analysis machine (TAX-T2) of Stable Micro Systems as known in the art. (e.g. WO 2012/097930). That method is based on a standard measurement called TPA (Texture Profile Analysis), as known for a skilled person and as described for example in "Gums and Stabilisers for the Food Industry 6", edited by G.O. Phillips, P.A. Williams and D.J. Wedlock (published by Oxford University Press, 1992). The product with minimum dimensions of 45 mm length / 30 mm width / 10 mm height, in the packaging (e.g. a plastic tub), is punched twice with a 5 mm diameter spherical (ball) probe (P/5S, stainless steel), to create a small deformation of the surface of the product by 2,5 mm. The TA-parameters are: Prespeed 1 mm/s, Test speed 0.5 mm/s, Post-Test speed 1 mm/s, Distance 2.5 mm, Second Distance 2.5 mm, Trigger Auto, Trigger Force 0.0 g, TriggerDistance 0.1 mm.

For a gel, the force required for the second deformation step is close to the force required for the first deformation step. This is because of the elastic character of a gel. For a paste (which is not liquid), the force required for the second deformation step will be significantly lower, as in a paste the elasticity is low, if not absent. The time between the two measurements points is sufficient to allow a possible reformation of the gel structure after the first deformation. Typically, the time between the measurements is 10 seconds. For a gel, typically the force required for the second deformation is higher than 85%, preferably higher than 87%, most preferably higher than 90% of the force required for the first deformation.

Preferably, the structured food concentrate should also have a certain strength: preferably the strength should be such that the force (in gram) necessary for a plunger to penetrate 10 mm in a structured food concentrate is typically above 15g, preferably above 30g, more preferably above 50g. Moreover, low to no phase separation is desired.

Preferably, the strength measurement is carried out after 1 wk storage at ambient temperature using a Texture Analyser TA - XT2 plus (Stable Micro Systems Ltd) with a fingerprobe of 12.7mm diameter. The sample is filled in a polypropylene container with the following dimensions:

- bottom diameter: 5 cm
- top diameter: 6.3 cm
- height of the container: 7.3 cm.

and closed with a lid. The applied filling height is 5 cm. The finger probe penetrates the sample 15mm in depth. The strength of the structured food concentrate corresponds to the force needed at 10mm depth.

| Measuring Program: | *Measuring tool:* | Cylindrical finger probe (12,7mm diameter) |
|---|---|---|
| | *Mode:* | Measure Force in Compression |
| | *Option :* | Return to Start |
| | *Pre - Test Speed:* | 1,0 mm/s |
| | *Test Speed:* | 0,5 mm/s |
| | *Post - Test Speed:* | 10 mm/s |
| | *Distance:* | 15 mm |
| | *Trigger Type:* | Auto - 0,5 g |

The structured food concentrate of the present invention preferably has a G', G", the ratio of G'/G" and/or strength as described above.

Gelatine

The structured food concentrate comprises 1 to 30% by weight of gelatine based on the total water content of the food concentrate. Preferably, the structured food concentrate comprises at least 2 wt% and preferably at most 20 wt% and more preferably at most 9 wt% of gelatin by weight of the total water content of the food concentrate. Gelatine structures the structured food concentrate, preferably in the form of a gel. The structuring property of gelatin is also referred to as the gelling property. Two commercially available variants of gelatin exist, and both are suitable for use in the present invention: type A gelatin and type B gelatin. Gelatin is referred to as type A gelatin when the gelatin is obtained via acid extraction. Gelatin is referred to as type B gelatin when the gelatin is obtained via alkaline extraction. Which method is chosen as extraction method, depends on the source of the gelatin. Pig skin is the most popular source of gelatin and is processed through the acidified route. When bones or (cattle)-hides are the source of the gelatin, the gelatin is obtained via the alkaline route.

As an example, pig based gelatin is available in two variants, type A from pig skin, and type B from pig bones. In this case the latter is almost an exception in production. Beef gelatin is not (or hardly) available in a type A variant. Due to the different treatments, the two types of gelatin have different gel properties, as a consequence of a difference in iso-electric point (IEP). Depending on the IEP of used gelatin, an adaptation in pH may help in achieving full gelling properties. It is known to the skilled person how to change the pH in such a way that an optimal structuring is obtained, depending on the type and source of the gelatin used.

For the product of the invention by gelatine we mean any type of gelatine that is available in food grade specifications. Its origin can be porc, beef, fish or any other source of edible gelatin. It is preferred that the gelatine has a bloom strength between 100 and 350, more preferably between 160 and 250, where the gelatine can also consist of a mixture of gelatines with different bloom strengths. Depending on the formulation of the concentrated food product, a certain bloom value could be preferred to achieve better product properties. The bloom strength of the gelatine may have an influence on the viscosity during processing, on the final gel structure and stability of the food concentrate, and on the dissolution properties.

The composition may further comprise gelatine hydrolysates in addition to gelatine.; like gelatine, the gelatine hydrolysates appear to be aiding the emulsification process. When present the weight/weight ratio of gelatine to gelatine hydrolysates is preferably between 50:1 and 1:5, more preferably between 30:1 and 1:2, most preferably between 20:1 and 3:1. Gelatine hydrolysates have no gelling properties (bloom 0).

Salt

The food concentrate according to the present invention is preferably a savoury concentrate product that can be used as to prepare for example a bouillon, a soup, a sauce, gravy or a seasoned dish. Generally, such a product is diluted, for example in water, or in a dish, for example in a liquid dish or in a sauce or in a vegetable dish or a rice dish, to obtain a food product which is ready for consumption. Inherently, the concentrated food composition according to the invention comprises a high salt content, to allow the conventional relatively high dilution factors, while maintaining a proper taste impact, but also to support microbiological stability of the concentrate over shelf-life.

To this end, the food concentrate according to the invention preferably comprises salt. Salt preferably comprises common salt also referred to as table salt and NaCl. In addition, part of the salt may comprise KCl or any low sodium mineral salt. Preferably at least 50 wt%, more preferably at least 80 wt% of the salt comprises NaCl, even more preferably the salt comprises more than 90 wt% of NaCl. Salt is preferably NaCl.

The structured, preferably gelled food concentrate comprises salt preferably in an amount of from 15 wt% to 40 wt%, more preferably at least 20 wt%, but typically not more than 35 wt%, preferably not more than 30 wt% based on the total water content of the concentrated food composition.

The total amount of salt is calculated as standard in the art, and is according to the following formula:

$$((\text{weight of salt}) / (\text{weight of salt} + \text{weight of total water content})) * 100.$$

For example 5 g salt in 20 g total water content results in an amount of salt of 20 wt% on total water content. When preparing the food concentrate of the invention, this amount of salt can be added during preparation. The same formula is used, mutatis mutandis for calculating other ingredients the amount of which is described as based on the total water content, such as for example gelatine.

The water activity $a_w$ of the total concentrate as it is in the packaging - if packaged - is preferably higher than 0.5, more preferably more than 0.6, even more preferably more than 0.65, even more preferably more than 0.7 and preferably less than 0.98, more preferably less than 0.9, even more preferably less than 0.85, most preferably less than 0.80 and can preferably be from 0.5 to 0.98, more preferably from 0.6 to 0.9, even more preferably from 0.65 to 0.85, even more preferably from 0.65 to 0.80, most preferably from 0.70 to 0.80.

It is noted that high salt levels typically hamper the gelling ability of gelatine; it is the presence of the emulsified oil that surprisingly counteracts the salt sensitivity of the gelling agent.

Oil

The present invention comprises 20-75wt% of an oil or fat based on the total weight of the product. Without wishing to be bound by theory, the oil or fat is emulsified in water, in which gelatine can act as the emulsifier and gelling agent.

For this purpose it is essential that the water:oil ratio, calculated as a weight/weight ratio, is between 1:0.75 and 1:4, more preferably between 1:1 and 1:3, still more preferably between 1:1 and 1:2.5, even more preferably between 1:1 and 1:2.2. For the purpose of this weight ratio the total amount of water in the concentrate should be taken.

Oil in the present context are triglycerides, and include oils and fats that are solid or liquid at 25 °C..

Preferably oil comprises an oil selected from the group consisting of animal fat, butter fat, vegetable oil, fractions of animal fat, fractions of butter fat, fractions of vegetable oil, derivatives of animal fat, derivatives of butter fat, derivatives of vegetable oil and mixtures of all of before mentioned components. More preferably the oil comprises an oil selected from the group consisting of porc fat, chicken fat, beef fat, butter fat, fish oil, sun flower oil, olive oil, palm oil, palm kernel oil, corn oil, cottonseed cake oil, soy bean oil, arachis oil, sesame oil, canola oil, or rapeseed oil, their fractions, their derivatives and mixtures thereof. An example of a an oil fraction is palm stearine which is solid at 20°C and therefore often referred to as palm fat. An example of an oil derivative is fully hydrogenated rape seed oil. The latter is termed oil but actually solid at 20°C so can also be referred to as a fat.

Preferably at least part of the oil used should be liquid at ambient temperature, because it will maintain the elasticity of the final concentrated product. Whereas the use of fat, which is defined here as solid at ambient temperature, may compromise on final product properties, and lead to gels with significantly lower elasticity. Higher amounts of fat which are solid at ambient temperature (solid fat) result in more pasty products, in particular solid fats higher melting temperature like palm fat (melting point of 50-60°C). However, the added creaminess would still be delivered to the end application, as the product remains turbid and white. Also the processing advantage of an increased viscosity compared to a gelatine solution without fat or oil, is independent of the choice of fat or oil.

The product according to the invention gives a whitish appearance upon dissolution of the food concentrate in water. Moreover, the product delivers an increase in in-mouth creaminess when the end-application is tasted.

The product of the invention does not only have an increased viscosity during processing, it is, once formed, also more stable against elevated temperatures upon storage. While a normal gelatine gel melts around 33-39 °C, the product of the invention is typically stable even at temperatures up to 55 °C. Besides improved on-shelf stability this improves the storage and transport flexibility, i.e. there is no need for cooled transport, even in countries with a warm climate.

Emulsion

The oil in the present invention is present as an oil-in-water emulsion. That means the oil is present in the emulsified state. To facilitate the emulsification of the oil, a surface active agent, surfactant or emulsifier can be present in the product of the invention. Emulsifiers also increase the stability of the oil droplets and can help in preventing the destabilization of the emulsion, for example by coalescence.

Gelatine is known to be a surface active agent. Therefore, in the product of the invention, gelatine itself might facilitate the emulsification of the oil, as well as stabilize the oil droplets. It cannot be excluded that other ingredients, such as taste imparting ingredients and the components therein, also contribute to the emulsification and stabilization process.

**Taste imparting ingredients**

The composition may further comprise taste imparting ingredients and colourants.

The concentrate of the present invention preferably comprises taste imparting components, such as flavours, yeast extracts, spices, vegetables, meat, fish, meat extracts, and/or flavour enhancer like monosodium glutamate, nucleotides and organic acids. It may further comprise colourants. Taste imparting components and colourants can be added in powdery form, for example, vegetable powder and yeast extract, but also as liquid or pasty extracts. Taste imparting ingredients and colourants are preferably present in an amount of from 0.1 to 30 wt%, more preferably of from 2 to 25 wt%, most preferably of from 5 to 20 wt% based on total product weight.

It might be preferred that the food concentrate of the present invention comprises microbiological active ingredients, such as preservatives or acids. Preservatives or acids may be for example lactic acid, citric acid, potassium sorbate or benzoate.

The food concentrate according to the invention may further comprise fillers, like maltodextrins or glucose syrups.

**Product**

The weight of the concentrate in the form of a paste, preferably a gel according to the present invention is preferably more than 2 g, preferably more than 5 g, even more preferably more than 10 g, most preferably higher than 15 g and preferably less than 10 kg, more preferably less than 1 kg, even more preferably less than 500 g, even more preferably less than 300 g, even more preferably less than 100 g, most preferably less than 50g.
Concentrates with a size of from 2 g to 300 g, preferably of from 10 g to 100 g, most preferably of from 15 g to 50 g are in particular suitable for, but not limited to, unit dosing and are preferably designed for single use.

The concentrate can also be a multi-dosing format, although the format is not limited to this. In this case the consumer can dissolve only part of the concentrate of the invention in an appropriate amount of liquid, by for example using a spoon or other suitable utensil. In case of a multi-dose format, the weight of the concentrate can preferably be from 50 g to 1 kg, more preferably from 100 g to 700 g. The weights above refer to the structured concentrate excluding any packaging.

Preferably the (packaged) savoury food concentrate according to the invention is a concentrate for a soup, a bouillon, a seasoning or a dish specific seasoning, a sauce or a gravy.

**Optional ingredients**

The composition of the (packaged) savoury food concentrate according to the invention may further comprise an additional binding agent, which purpose is to give required texture in end application when not achievable by the gelatine and the emulsion themselves. With required texture in end application is preferably meant a certain viscosity needed for specific applications like cooking soups, instant soups, or sauces. This binding agent is selected from non-gelatinized starches or salt-sensitive texturing agents like gellan, alginate, iota-carrageenan, kappa-carrageenan, lambda-carrageenan, agar or mixtures of thereof, preferably gellan or alginate or mixtures of thereof, whereby preferably gellan is present in an amount of from 0.2 and 2.0 wt% and preferably alginate in an amount of between 1 and 8 wt%, preferably between 2 and 6 wt%, based on the weight of the structured, preferably gelled food concentrate.
In presence of non-gelatinized starch as a binding agent, the non-gelatinized starch starts to gelatinize and gives some viscosity to the dish as soon as the concentrate is diluted and heated to a certain temperature, as required for specific application.
In case of salt-sensitive texturing agents, they show texture enhancing behaviour in an aqueous solution with low salt concentration, like it is the case in the final application. With texture enhancing behaviour is meant that when the salt sensitive gum dissolved in an aqueous solution, it is able to give a gel-like texture to the final solution or to thicken the aqueous solution. At a salt concentration above a critical concentration like in the food concentrate as such, the salt-sensitive gum is not able to form a gel or to provide thickening, at least not to the extent observed in the absence of salt.
This is especially preferred for fast dissolving gels, that release the binding agent quickly into the solution.

**Process for preparing a packaged structured food concentrate**

The invention further provides a process for preparing a packaged structured food concentrate as described above, preferably in the form of a gel, comprising the steps of:

a) melting solid fats, if solid fats are used in step c
b) preparing a mixture comprising:

- water,
- premix of dry ingredients,

c) adding oils and/or melted fats into the mixture, in a way that allows proper mixing and emulsification,
d) stirring the mixture till fully homogenized,
whereby NaCl is added to the mixture at steps b) or d)
whereby gelatin is added to the mixture at steps b) or d)
e) filling a package with the fully homogenized mixture resulting from step d),
f) allow setting of the mixture resulting from step e),

to form a packaged structured food concentrate, preferably in the form of a gel.

If solid fat is used in the inventive process, i.e. fat which is solid at ambient temperature, it is melted before being mixed. The liquid form allows the fat to be mixed and emulsified with the other ingredients.
The process can be adapted to the type of gelatine used, for example conventional gelatine or instant gelatine. The latter is pre-treated gelatine which does not require heating to form a gel. If instant gelatine is used than the process as described above does not require a heating step.

Conventional gelatine can be used as known in the art: after dissolving gelatine in water it requires a heating step. Dissolving gelatine typically takes some time (minutes) during which it swells.

To allow proper emulsification and appropriately swell the gelatin, it is preferred to apply a heating step, with a temperature of 40°C to 100°C, more preferably 60 to 90°C, most preferably 70 to 85°C. Preferably the heating step is applied before step c. Each of gelatine and salt may be added in step b or d and gelatin is preferably added in step b. When gelatin is added in step b, salt may be added in step b but preferably in step d. In the factory the addition of salt will also depend on the practical convenience. When gelatin is added in step d, an emulsifier may be added in step b to aid in proper emulsification like gelatin hydrolysates. Heating must not be excessive as this may denature gelatin and decrease the gelling effect.

In a preferred embodiment, the gelatin is pre-swollen in water before adding it to the mixture; this is preferably included in the scope of the present invention. The water used in pre-swelling is taken from the total water of the composition. When pre-swollen gelatin is used it is preferably added in step d.

It is preferred that the mixture is stirred to homogenisation in each of the steps.

**Examples**

Example 1, effect of the water:oil ratio

In this example the effect of the oil water ratios inside and outside the scope of the present invention is compared.

| | **Comp A** | **Ex 1a** | **Ex 1b** | **Ex1c** | **Ex 1d** | **Ex 1e** |
|---|---|---|---|---|---|---|
| Oil (%) | 26.2 | 36.8 | 43.8 | 59.9 | 70.4 | 73.0 |
| Water (%) | 51.9 | 46.0 | 39.9 | 27.2 | 20.1 | 18.3 |
| Salt (% on water) | 25.0 | 25.0 | 25.0 | 26.0 | 26.0 | 26.0 |
| Gelatine (% on water) | 7.0 | 7.0 | 7.0 | 10.0 | 10.0 | 10.0 |
| water:oil ratio (wt) | **1:0.5** | **1:0.8** | **1:1.1** | **1:2.2** | **1:3.5** | **1:4** |
| Appearance | Phase separation, gel phase on top and syneresis in bottom | Shape-stable gel | Shape-stable gel | Shape stable gel | Shape-stable gel | Shape-stable gel |
| Firmness (g) At 10mm penetration | N/A | 91.1 ± 3.7 | 148.8 ± 13.8 | 222.8 ± 17.7 | 86.4 ± 12.5 | 156.4 ± 3.5 |
| Structure stability at ambient | N/A | Shape-stable gel structure maintained over more than 6 months | Shape-stable gel structure maintained over more than 6 months | Shape-stable gel structure maintained over more than 6 months | Shape-stable gel structure maintained over more than 6 months | Shape-stable gel structure maintained over more than 6 months |

The table above shows that at the water:oil ratio according to the invention, a shape stable gel can be made that remains stable for over 6 months. Below the range of the invention, the gel shows strong phase separation and does not have the required stability.

Example 2, effect of the salt concentration

In this example the effect of the salt level inside and outside the scope of the present invention is compared.

| | Comp B | Ex 2a | Ex 2b | Ex 2c | Ex 2d |
|---|---|---|---|---|---|
| Oil (%) | 47.8 | 45.8 | 44.5 | 39.8 | 38.1 |
| Water (%) | 43.5 | 41.7 | 40.4 | 36.2 | 34.6 |
| Salt (% on water) | **7.0** | **15.0** | **20.0** | **35.0** | **40.0** |
| Gelatine (% on water) | 10.0 | 10.0 | 10.0 | 10.0 | 10.0 |
| water:oil ratio (wt) | 1:1.1 | 1:1.1 | 1:1.1 | 1:1.1 | 1:1.1 |
| Appearance | Very plastic shape stable gel, very hard and sticky, difficult to take out of the packaging | Shape stable gel | Shape stable gel | Shape stable gel | Shape stable gel |
| Firmness (g) at 10mm penetration | 655.8 ± 9.4 | 410.1 ± 28.6 | 152.6 ± 15.5 | 153.2 ± 11.2 | 184.7 ± 11.4 |
| Structure stability at ambient | N/A | Shape-stable gel structure maintained over more than 6 months | Shape-stable gel structure maintained over more than 6 months | Shape-stable gel structure maintained over more than 6 months | Shape-stable gel structure maintained over more than 6 months |

The table above shows that at a salt concentration according to the invention, a shape stable gel can be made that remains stable for over 6 months. While the examples according to the invention 2a-d could be easily removed from the packaging in one piece, the comparative example B could not.

Example 3, effect of the total oil concentration

In this example the effect of the oil concentration inside and outside the scope of the present invention is compared.

| | Comp C | Comp D | Ex 3a | Ex 3b |
|---|---|---|---|---|
| Oil (%) | **0** | **15.1** | **59.9** | **73.0** |
| Water (%) | 69.2 | 59.8 | 27.2 | 18.3 |
| Salt (% on water) | 25.0 | 25.0 | 26.0 | 26.0 |
| Gelatine (% on water) | 10.0 | 7.0 | 10.0 | 10.0 |
| water:oil ratio (wt) | 1:0 | 1 : 0.25 | 1:2.2 | 1:4 |
| Appearance | Phase separation; gel phase in bottom, syneresis on top | Phase separation; gel phase on top + syneresis in bottom | Shape stable gel | Shape-stable gel |
| Firmness (g) at 10mm penetration | N/A | N/A | 222.8 ± 17.7 | 156.4 ± 3.5 |

(continued)

|  | Comp C | Comp D | Ex 3a | Ex 3b |
|---|---|---|---|---|
| Structure stability at ambient | N/A | N/A | Shape-stable gel structure maintained over more than 6 months | Shape-stable gel structure maintained over more than 6 months |

The table above shows that at oil content according to the invention, a shape stable gel can be made that remains stable for over 6 months. Below the range of the invention, the gel shows strong phase separation and does not have the required structure stability.

Example 4, gelatine stability

In this example the effect of the gelatine stability inside and outside the scope of the present invention is compared.

|  | Comp E | Ex 4a | Ex 4b | Ex 4c |
|---|---|---|---|---|
| Oil (%) | 61.6 | 61.5 | 44.5 | 43.3 |
| Water (%) | 28.0 | 28.0 | 40.4 | 39.4 |
| Salt (% on water) | 26.0 | 26.0 | 20.0 | 20.0 |
| Gelatine (% on water) | **0.5** | **1.0** | **10.0** | **15.0** |
| water:oil ratio (wt) | 1:2.2 | 1:2.2 | 1:1.1 | 1:1.1 |
| Appearance | Non shape-stable pasty product | Shape stable gel | Shape stable gel | Shape stable gel |
| Firmness (g) At 10mm penetration | 8.7 ± 0.4 | 15.6 ± 1.2 | 152.6 ± 15.5 | 400.0 ± 17.3 |
| Structure stability at ambient | N/A | Shape-stable gel structure maintained over more than 6 months | Shape-stable gel structure maintained over more than 6 months | Shape-stable gel structure maintained over more than 6 months |

The table above shows that at a gelatin concentration according to the invention, a shape stable gel can be made that remains stable for over 6 months. Below the range of the invention, the food concentrate shows strong phase separation and does not have the required structure stability. While the examples according to the invention 4a-c could be easily removed from the packaging in one piece, the comparative example E could not. Comparative example E was diluted (20g in 200ml hot water). The result did not have a creamy, white appearance but showed strong phase separation.

Example 5: creaminess (mushroom instant soup)

In this example the effect of the present invention on creaminess in the final application is showed, as comparison with existing prior art.

|  | Comp F (based on EP 1 962 619 B1) | Ex 5a |
|---|---|---|
| Oil (%) | 16.10 | 44.76 |
| Water (%) | 46.83 | 34.23 |

EP 3 091 855 B1

(continued)

| | Comp F (based on EP 1 962 619 B1) | Ex 5a |
|---|---|---|
| Salt (% on water) | 26.98 | 22.94 |
| Gelling agent (% on water) | 2.09 (Xanthan - LBG) | 3.85 (Gelatin) |
| Colourant (%) | 1.05 | 1.05 |
| Other taste or colour imparting components (%) - same ingredients in same proportions for both trials | 17.71 | 8.41 |
| water:oil ratio (wt) | 1:0.36 | 1:1.31 |
| Appearance | Shape stable gel | Shape stable gel |
| Firmness (g) At 10mm penetration | 129.8 ± 8.3 | 78.2 ± 3.7 |
| Structure stability at ambient | Shape-stable gel structure maintained over more than 1 month | Shape-stable gel structure maintained over more than 1 month |
| Creamy appearance in the instant soup prepared | Low creaminess, quite dark | Very creamy appearance, light colour |

The example 5a according to the present invention shows a significantly higher creaminess, than the comparative example F which has been formulated according to prior art as described in EP 1 962 619 B1. The taste imparting ingredients included mushroom powder, MSG and sugar roughly equal amounts.

Process to prepare Comp F and Ex 5a:

Recipes of example 5 were prepared on labscale using a Thermomix TM 31 with the following process (batch size: 1,5kg):

Powders were added into water at ambient temperature, while applying stirring at Level 3 to form a mixture (step b). The mixture was heated up to 83°C while applying stirring (Level 3). Oil was added slowly into the mixture while applying high-shear (Level 5) in a way that allows proper mixing and emulsification (step c). After addition, the mixture was further mixed with high-shear during 3 minutes till fully homogenized (step d). The fully homogenized product was filled into containers immediately afterwards (filling temperature around 84°C), followed by sealing and leaving to cool to room temperature. The product was stored at ambient temperature afterwards. The same process was used for examples 1-4 with the exception that salt was added after addition of the oil. The oil used in examples 1-5 was sunflower oil. The gelatin employed was porc gelatine 250 bloom except for examples 1d, 1e, 3b where 160 Bloom was used.

Example 6: Structured food concentrates prepared oil and hard fat

| | Example 6a with liquid oil | Example 6b with hard fat |
|---|---|---|
| Sunflower oil (%) | 43,6 | 0 |
| Palm fat flakes (%) | 0 | 43,6 |
| Water (%) | 38,5 | 38,5 |
| Salt (% on water) | 25,0 | 25,0 |
| Gelatin 250 Bloom (% on water) | 10,7 | 10,7 |
| Water:oil ratio (wt) | 1:1,1 | 1:1,1 |
| Appearance | Shape-stable elastic gel, | Non-sticky dough texture, |

Examples 6a and b were prepared as described for Example 5. Both examples 6a and b were easy to remove from the packaging in one piece.

Example 7 Structured food concentrated prepared with fat (solid at 20°C)

| | 7a | 7b | 7c | 7d | 7e |
|---|---|---|---|---|---|
| | [%] | [%] | [%] | [%] | [%] |
| Palm oil (fractionated) [SMP 20-30°C] | 50,7 | - | - | - | |
| Palm fat fractionated [SMP 48-50°C] | - | 50,7 | - | - | |
| Palm fat fully hydrogendated [SMP 50-60°C] | - | - | 50,7 | - | |
| Rapeseed fully hydrogenated [SMP >70°C] | - | - | - | 50,7 | |
| Beef fat refined stabilized with rosmary extract | | | | | 43,6 |
| Water | 33,6 | 33,6 | 33,6 | 33,6 | 38,5 |
| Salt | 11,2 | 11,2 | 11,2 | 11,2 | 12,8 |
| Gelatine 250 Bloom (20 mesh) | 4,0 | 4,02 | 4,0 | 4,0 | 4,6 |
| Yeast extract | 0,5 | 0,5 | 0,5 | 0,5 | 0,5 |
| Total | 100 | 100 | 100 | 100 | 100 |
| | | | | | |
| Salt (on water [%]) | 25 | 25 | 25 | 25 | 25 |
| Gelatine (on water [%]) | 10,7 | 10,7 | 10,7 | 10,7 | 10,7 |
| water: oil (wt/wt) | 1:1,5 | 1:1,5 | 1:1,5 | 1:1,5 | 1:1,1 |
| (SMP=Slip Melting Point) | | | | | |

Examples 7a-7e were prepared with the following process.
Gelatine granules were first swollen with 180g of the water, during 10 min and then cut into small cubes.

a) Fat was melted for those examples where fat was used
b) Salt and yeast were added to water at ambient temperature and stirred to form a mixture (Stirrer Level 3). The mixture was heated while stirring at level 3,
c) At about 85°C the liquid oil/fat was added slowly into the vessel (~1 min addition) with stirring level 5 to allow proper mixing and emulsification,
d) The mixture was sheared for 1 more minute at level 5. The gelatin cubes were added when the mixture was at least 75°C into the vessel with stirring level 2. After addition of the gelatine, the heating was stopped and mixture was further stirred at level 5-6 during 1,5 min until the mixture was fully homogenised (shearing was increased slowly after addition of gelatin).
e) the homogenised mixture was filled at a temperature of least 72°C into containers and sealed;
f) the mixture was allowed to set at ambient temperature to form a packaged structured food concentrate.

After 3 days storage at ambient temperature all 5 examples 7a-7e resulted in shape stable structured food concentrates which could be easily removed from the packaging. Each of the samples was diluted in hot water (20 g of food concentrate in 200 ml hot water). Upon dilution a creamy, whitish, stable emulsion was obtained. Example 7a, d and e were elastic gels while 7d was hard and 7b a softer paste.

Example 8: Structured food concentrates with gelatine and gelatine hydrolysates

The following food concentrates were prepared according to example 4. Both 8a and 8b resulted in shape stable gels.

| (wt% by weight of the total composition unless indicated otherwise | 8a % | 8b % |
|---|---|---|
| Sunflower Oil | 34,7 | 43.6 |
| Water | 45.9 | 39.7 |
| Gelatine bloom 250 | 3.45 | 3 |
| Gelatine hydrolysate (30 mesh ex Gelita Group) | 0.6 | 0.5 |
| Salt | 15.3 | 13.2 |
| Total | 100 | 100 |
| | | |
| Salt (% on water) | 25 | 25 |
| Ratio of gelatine to gelatine hydrolysate | **5,7:1** | **6:1** |

**Claims**

1. A structured food concentrate comprising

   a 1 to 30% by weight of gelatine based on the total water content of the food concentrate
   b 20 to 75% by weight of an oil or fat based on the total weight of the food concentrate
   c 15 to 40% by weight of salt based on the total water content of the food concentrate
   d water

   **Characterised in that** the water:oil mass ratio is between 1:0.75 and 1:4.

2. A concentrate according to claim 1, wherein at least part of the oil is liquid at room temperature.

3. A concentrate according to any one of the preceding claims, wherein the oil:water mass ratio is between 1:1 and 1:2.5.

4. A concentrate according to any one of preceding claims further comprising 0.1-30 wt% taste imparting ingredients and/or colourants.

5. A concentrate according to any one of the preceding claims, wherein the food concentrate is a bouillon, seasoning, soup, sauce, or gravy concentrate.

6. A concentrate according to any one of the preceding claims, wherein the food concentrate, is a gel.

7. A concentrate according to any one of the preceding claims wherein the absolute value of the viscous modulus G" is preferably higher than 1, more preferably higher than 10, even more preferably, higher than 80 Pa.

8. A concentrate according to any one of the preceding claims having a ratio of elastic modulus G' to viscous modulus G" of greater than 1, preferably, greater than 3, more preferably greater than 5 and preferably this ratio is lower than 1000.

9. A concentrate according to any one of the preceding claims wherein the elastic modulus G' is between 30 and 50000 Pa.

10. A concentrate according to any one of the preceding claims wherein the strength of the concentrate is such that the force (in gram) necessary for a plunger to penetrate 10 mm in the structured food concentrate is typically above 15g, preferably above 30g, more preferably above 50g.

11. A concentrate according to any one of the preceding claims, wherein the food concentrate further comprises gelatine hydrolysates as part of the total gelatine, wherein the gelatine hydrolysates are present in a the ratio of gelatine to

14

gelatine hydrolysates of between 50:1 and 1:5.

12. Process for preparing a packaged structured food concentrate, comprising

- 1 to 30% by weight of gelatine based on the total water content of the food concentrate,
- 20 to 75% by weight of an oil or fat based on the total weight of the food concentrate,
- 15 to 40% by weight of salt based on the total water content of the food concentrate,
- Water, and **characterised in that** the water:oil mass ratio is between 1:0.75 and 1:4,

the process comprising the steps of:

a) melting solid fats, if fats are used in step c
b) preparing a mixture comprising:

- water,
- premix of dry ingredients,

c) adding oils and/or melted fats into the mixture, in a way that allows proper mixing and emulsification,
d) stirring the mixture till fully homogenized,

whereby NaCl is added to the mixture at steps b) or d)
whereby gelatin is added to the mixture at steps b) or d)

e) filling a package with the fully homogenized mixture resulting from step d),
f) allow setting of the mixture resulting from step e),

to form a packaged structured food concentrate, preferably in the form of a gel. gel.

13. A process according to claim 12, wherein the gelatin is pre-swollen in water before adding it to the mixture.

14. A process according to claim 12 or 13, wherein a heating step is applied, with a temperature of 40°C to 100°C.

15. A process according to any one of claims 12-14 wherein the concentrate is according to any one of claims 2-11.


**Patentansprüche**

1. Strukturiertes Nahrungsmittelkonzentrat, umfassend

a 1 bis 30 Gewichts-% Gelatine, bezogen auf den Gesamtwassergehalt des Nahrungsmittelkonzentrats,
b 20 bis 75 Gewichts-% eines Öls oder Fetts, bezogen auf das Gesamtgewicht des Nahrungsmittelkonzentrats,
c 15 bis 40 Gewichts-% Salz, bezogen auf den Gesamtwassergehalt des Nahrungsmittelkonzentrats,
d Wasser,

**dadurch gekennzeichnet, dass** das Wasser:Öl-Masseverhältnis zwischen 1:0,75 und 1:4 liegt.

2. Konzentrat nach Anspruch 1, wobei mindestens ein Teil des Öls bei Raumtemperatur flüssig ist.

3. Konzentrat nach irgendeinem der vorhergehenden Ansprüche, wobei das Öl:Wasser-Masseverhältnis zwischen 1:1 und 1:2,5 liegt.

4. Konzentrat nach irgendeinem der vorhergehenden Ansprüche, des Weiteren umfassend 0,1-30 Gew.-% geschmacksverleihende Zutaten und/oder Farbmittel.

5. Konzentrat nach irgendeinem der vorhergehenden Ansprüche, wobei das Nahrungsmittelkonzentrat eine Bouillon, Würze, Suppe, Soße oder ein Bratensoßenkonzentrat ist.

6. Konzentrat nach irgendeinem der vorhergehenden Ansprüche, wobei das Nahrungsmittelkonzentrat ein Gel ist.

7.  Konzentrat nach irgendeinem der vorhergehenden Ansprüche, wobei der absolute Wert des Viskositätsmoduls G" vorzugsweise höher als 1, bevorzugter höher als 10, noch bevorzugter höher als 80 Pa ist.

8.  Konzentrat nach irgendeinem der vorhergehenden Ansprüche mit einem Verhältnis des Elastizitätsmoduls G' zum Viskositätsmodul G" größer als 1, vorzugsweise größer als 3, bevorzugter größer als 5 ist und wobei dieses Verhältnis vorzugsweise niedriger als 1000 ist.

9.  Konzentrat nach irgendeinem der vorhergehenden Ansprüche, wobei der Elastizitätsmodul G' zwischen 30 und 50000 Pa liegt.

10. Konzentrat nach irgendeinem der vorhergehenden Ansprüche, wobei die Festigkeit des Konzentrats derartig ist, dass die Kraft (in Gramm), die für einen Stempel erforderlich ist, um in das strukturierte Nahrungsmittelkonzentrat 10 mm einzudringen, typischerweise über 15 g, vorzugsweise über 30 g und bevorzugter über 50 g liegt.

11. Konzentrat nach irgendeinem der vorhergehenden Ansprüche, wobei das Nahrungsmittelkonzentrat des Weiteren Gelatinehydrolysate als Teil der gesamten Gelatine umfasst, wobei die Gelatinehydrolysate in einem Verhältnis von Gelatine zu Gelatinehydrolysaten zwischen 50:1 und 1:5 vorliegen.

12. Verfahren zur Herstellung eines verpackten strukturierten Nahrungsmittelkonzentrats, umfassend

    • 1 bis 30 Gewichts-% Gelatine, bezogen auf den Gesamtwassergehalt des Nahrungsmittelkonzentrats,
    • 20 bis 75 Gewichts-% eines Öls oder Fetts, bezogen auf das Gesamtgewicht des Nahrungsmittelkonzentrats,
    • 15 bis 40 Gewichts-% Salz, bezogen auf den Gesamtwassergehalt des Nahrungsmittelkonzentrats,
    • Wasser und **dadurch gekennzeichnet, dass** das Wasser:Öl-Masseverhältnis zwischen 1:0,75 und 1:4 liegt,

    wobei das Verfahren die Schritte umfasst:

    a) Schmelzen fester Fette, wenn die Fette in Schritt c verwendet werden,
    b) Herstellen einer Mischung, umfassend:

      - Wasser,
      - Vormischung von trockenen Zutaten,

    c) Zugeben von Ölen und/oder geschmolzenen Fetten in die Mischung in einer Weise, die das richtige Mischen und Emulgieren ermöglicht,
    d) Rühren der Mischung, bis sie vollständig homogenisiert ist,
    wobei NaCl bei den Schritten b) oder d) der Mischung zugegeben wird, wobei Gelatine der Mischung in den Schritten b) oder d) zugegeben wird,
    e) Abfüllen einer Verpackung mit der aus dem Schritt d) resultierenden vollständig homogenisierten Mischung,
    f) Verfestigenlassen der aus dem Schritt e) resultierenden Mischung,

    um ein verpacktes strukturiertes Nahrungsmittelkonzentrat, vorzugsweise in Form eines Gels, zu bilden.

13. Verfahren nach Anspruch 12, wobei die Gelatine vor ihrer Zugabe zu der Mischung in Wasser vorgequollen wird.

14. Verfahren nach Anspruch 12 oder 13, wobei ein Erhitzungsschritt bei einer Temperatur von 40°C bis 100°C angewandt wird.

15. Verfahren nach irgendeinem der Ansprüche 12-14, wobei das Konzentrat ein Konzentrat nach irgendeinem der Ansprüche 2-11 darstellt.


**Revendications**

1.  Concentré alimentaire structuré comprenant

    a de 1 à 30 % en masse de gélatine rapportés à la teneur totale en eau du concentré alimentaire
    b de 20 à 75 % en masse d'une huile ou graisse rapportés à la masse totale du concentré alimentaire

c de 15 à 40 % en masse de sel rapportés à la teneur totale en eau du concentré alimentaire

d de l'eau

**caractérisé en ce que** le rapport massique eau:huile est de 1:0,75 à 1:4.

2. Concentré selon la revendication 1, dans lequel au moins une partie de l'huile est liquide à température ambiante.

3. Concentré selon l'une quelconque des revendications précédentes, dans lequel le rapport massique huile:eau est de 1:1 à 1:2,5.

4. Concentré selon l'une quelconque des revendications précédentes, comprenant de plus 0,1-30 % en masse d'ingrédients communiquant du goût et/ou de colorants.

5. Concentré selon l'une quelconque des revendications précédentes, dans lequel le concentré alimentaire est un bouillon, un assaisonnement, une soupe, une sauce, ou un concentré de jus de viande.

6. Concentré selon l'une quelconque des revendications précédentes, dans lequel le concentré alimentaire est un gel.

7. Concentré selon l'une quelconque des revendications précédentes, dans lequel la valeur absolue du module visqueux G" est de préférence supérieure à 1, encore mieux supérieure à 10, bien mieux encore supérieure à 80 Pa.

8. Concentré selon l'une quelconque des revendications précédentes ayant un rapport de module élastique G' à module visqueux G" supérieur à 1, de préférence supérieur à 3, encore mieux supérieur à 5 et ce rapport est de préférence inférieur à 1 000.

9. Concentré selon l'une quelconque des revendications précédentes, dans lequel le module élastique G' est de 30 à 50 000 Pa.

10. Concentré selon l'une quelconque des revendications précédentes, dans lequel la résistance du concentré est telle que la force (en gramme) nécessaire pour qu'un piston pénètre 10 mm dans le concentré alimentaire structuré est typiquement supérieure à 15 g, de préférence supérieure à 30 g, encore mieux supérieure à 50 g.

11. Concentré selon l'une quelconque des revendications précédentes, dans lequel le concentré alimentaire comprend de plus des hydrolysats de gélatine comme une partie de la gélatine totale, dans lequel les hydrolysats de gélatine sont présents dans le rapport de gélatine à hydrolysats de gélatine de 50:1 à 1:5.

12. Procédé de préparation d'un concentré alimentaire structuré emballé, comprenant

- de 1 à 30 % en masse de gélatine rapportés à la teneur totale en eau du concentré alimentaire,
- de 20 à 75 % en masse d'une huile ou graisse rapportés à la masse totale du concentré alimentaire,
- de 15 à 40 % en masse de sel rapportés à la teneur totale en eau du concentré alimentaire,
- de l'eau, et **caractérisé en ce que** le rapport massique eau:huile est de 1:0,75 à 1:4,

le procédé comprenant les étapes de :

a) fusion de graisses solides, si des graisses sont utilisées dans l'étape c

b) préparation d'un mélange comprenant :

- de l'eau,
- un pré-mélange d'ingrédients secs,

c) addition d'huiles et/ou de graisses fondues dans le mélange, de manière à permettre un mélange et une émulsification appropriés,

d) agitation du mélange jusqu'à ce qu'il soit complètement homogénéisé,

NaCl est par-là ajouté au mélange aux étapes b) ou d)

de la gélatine est par-là ajoutée au mélange aux étapes b) ou d)

e) remplissage d'un emballage avec le mélange complètement homogénéisé résultant de l'étape d),

f) laisser le mélange résultant de l'étape e) se déposer,

pour former un concentré alimentaire structuré emballé, de préférence dans la forme d'un gel.

13. Procédé selon la revendication 12, dans lequel la gélatine est pré-gonflée dans de l'eau avant l'addition de celle-ci au mélange.

14. Procédé selon la revendication 12 ou 13, dans lequel une étape de chauffage est appliquée, avec une température de 40°C à 100°C.

15. Procédé selon l'une quelconque des revendication 12-14, dans lequel le concentré est selon l'une quelconque des revendications 2-11.

**EP 3 091 855 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2007068483 A
- WO 2007068402 A
- WO 2007068484 A
- EP 2468110 A
- WO 2012062919 A
- WO 2012097930 A
- EP 1962619 B1

### Non-patent literature cited in the description

- Das Rheologie Handbuch. **THOMAS MEZGER.** Curt R. Vincentz-Verlag, 2000
- Gums and Stabilisers for the Food Industry 6. Oxford University Press, 1992